# EUROPEAN PATENT APPLICATION

(11) **EP 4 338 876 A1**
(43) Date of publication of application: **20.03.2024**
(21) Application number: 22765193.2
(22) Date of filing: 12.05.2022
(51) Int. Cl.: B23D 57/00, F16H 55/38, F16H 55/50

(54) **COATING FOR APPLICATION ON DIAMOND WIRE GUIDE WHEELS**

(30) Priority: 13.05.2021 PT 2021117227; 14.07.2021 PT 2021117344
(71) Applicant: Fravizel - Equipamentos Metalomecânicos SA, 2025-999 Lisboa (PT)
(72) Inventor: VICENTE FRAZÃO, Eliseu Manuel, 2025-161 ALCANEDE (PT)
(74) Representative: do Nascimento Gomes, Rui
(86) International application number: PCT/IB2022/054439
(87) International publication number: WO 2022/238959

(57) **Abstract**

The present disclosure relates to a coating (1) for application to diamond wire guide wheels (2) which allows its effective retention at the periphery of the wheel (2) without the need for fixing means other than the wheel itself. The coating (1) for application in the guide wheel (2) object of the present disclosure, coats the groove that any guide wheel (2) presents for alignment of the diamond wire. On the upper part, the coating has a notch (3) preventing the coating (1) from being ejected from the guide wheel (2), additionally comprising, on the lower part and on the face that touches the surface of the wheel (2), a chamfer (4) for fixing and guiding, inside the wheel (2), thus increasing the contact area of the coating (1) on the wheel (2) and ensuring greater effectiveness in the assembly adjustment and during the cutting operation.

## Description

### TECHNICAL FIELD OF THE DISCLOSURE

The present disclosure falls within the field of ornamental stones processing, in particular to a diamond wire drive and guide wheel, even more particularly to a coated diamond wire guide wheel.

### PRIOR ART OF THE DISCLOSURE

Cutting rock masses using diamond wire machines is a common procedure. These machines use drive wheels and guide wheels, which promote the movement of the diamond wire and simultaneously allow the wire to be guided. These wheels can be understood as rims, since they have an indentation in the entire length of their perimeter, not to accommodate a tyre, but for the diamond wire to be inserted in it, so as it does not deviate from the movement of the wheel. The wire is thus embedded in the wheel, allowing it to be handled by the wheel. This wheel then promotes directional wire handling, by positioning the wheel in the desired direction, and also, through mechanisms well-known in the field, the wire speed.

As these wheels are mostly made of metallic materials, when in contact with the diamond wire, and due to the friction of the wire movement, said materials undergo high wear, which can have as a consequence deviations in the direction of the wire. So, in order to avoid this, the majority of the guide wheels used on existing diamond wires is made of rubber-coated wheels.

The patent document CN201822092983 depicts a diamond wire guide wheel that is coated with a rubber, in which the guide wheel has such an indentation, or groove, for the wire to be positioned, and this groove is coated with a rubber ring, which can be replaced whenever it is worn.

This type of coating, however, still presents problems, which are seen as a huge disadvantage for this kind of procedure. These guide wheel coatings do not ensure their alignment on the guide wheels during machine operation, since they are fixed only by placing them into the groove of the guide wheels. There is no drive mechanism for the coating, which allows it to move towards the outside of the wheel, causing not only deviation in the cut but also damage to the cutting material.

Another disadvantage, which derives from the centrifugal speed, is the slipping of the wire. This can also occur because of the tension exerted by the wire on the wheel. This implies that the retention of these coatings in position cannot be guaranteed, i.e. the coating can sort of wobble in the groove of the wheel, which can lead to accidents due to the rubber, or even the diamond wire itself, possibly projecting out of the wheel.

Also, the thermomechanical variations of the wheels, either by solar or mechanical heating or variations of constructive measures or by wear resulting from a break in the coating, may cause lack of sufficient tightness to keep the coating in position.

The present solution solves the technical problems identified above, since the coating (1) for guide wheels, object of this disclosure, presents itself a notch (3) preventing the coating from being expelled out of the guide wheel. It also comprises a chamfer (4) on the lower perimetral sides for fixing and guiding inside the wheel (2), thus increasing the contact area of the coating (1) on the wheel (2) and guaranteeing greater effectiveness in the assembly adjustment as well as in the cutting, also limiting the elastic deformation of the coating and ensuring a better alignment of the diamond wire during the cutting operation.

### SUMMARY OF THE DISCLOSURE

The present disclosure relates to a coating (1) for application to diamond wire guide wheels (2) which allows the diamond wire to be effectively retained at the periphery of the wheel (2) without the need for any fixing means other than the wheel itself. The coating (1) for application in guide wheels (2) object of the present disclosure coats the groove that any guide wheel (2) presents for alignment of the diamond wire. On the upper part, the coating comprises a notch (3) preventing the coating (1) from being ejected from the guide wheel (2), also having on the lower part and on the face touching the surface of the wheel (2) a chamfer (4) for fixing and guiding inside the wheel (2), thereby increasing the contact area of the coating (1) on the wheel (2) and ensuring greater effectiveness in the assembly adjustment as well as during the cutting operation.

The coating (1) may consist of a groove for positioning a diamond wire and it may have:
a. two notches (3) on the upper inner portion located on each of the sides, configured to secure the coating (1) to a guide wheel (2); and
b. two chamfers (4) located on each edge of the lower outer portion of the coating (1).

The present disclosure further comprises a guide wheel. The diamond wire guide wheel (2) may present a coating (1) comprised of a groove for positioning a diamond wire and also:
a. two notches (3) on the inner upper portion located on each of the sides, securing the coating (1) to a guide wheel (2); and
b. two chamfers (4) located on each of the edges of the lower outer portion of the coating (1)

The guide wheel (2) may comprise a coating (1) for application on diamond wire guide wheels (2) according to the present disclosure.

### DESCRIPTION OF THE FIGURES

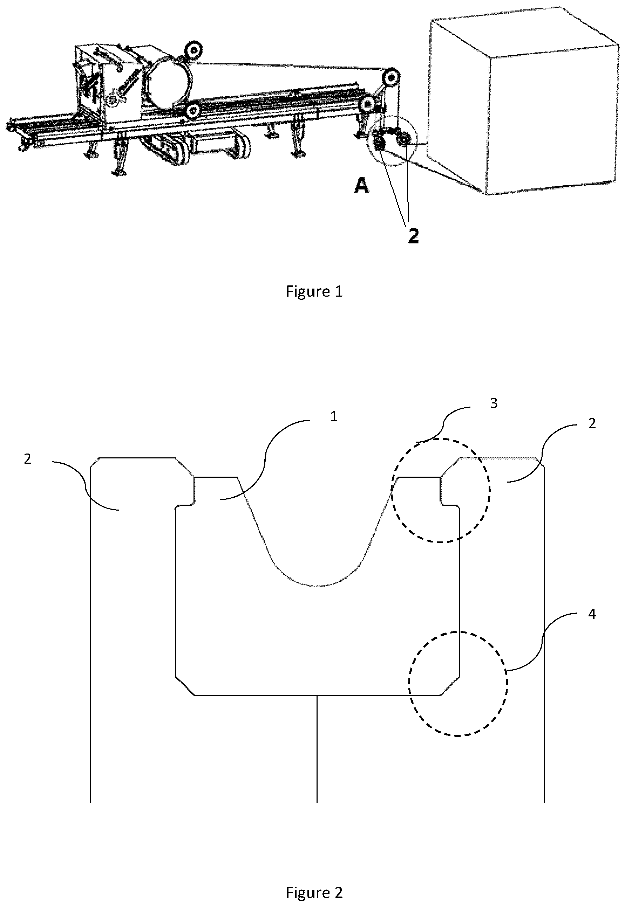

Figure 1 - Representation of a diamond wire cutting machine with drive wheel and/or guide wheels (2), in detail A.
Figure 2 - Sectional view of the coating (1) and the guide wheel (2), wherein the notch (3) and the chamfer (4) are identified.

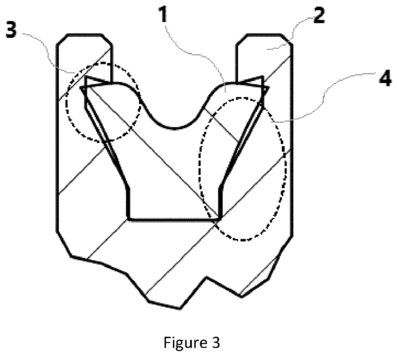

Figure 3 - Sectional view of the coating (1) and the guide wheel (2), wherein an adjustable notch (3) and an adjustable chamfer (4) are identified.

### DETAILED DESCRIPTION OF THE DISCLOSURE

The present disclosure relates to a coating (1) for application on diamond wire guide wheels (2), which allows the diamond wire to be effectively retained on the periphery of the wheel (2) without the need for fixing means other than the wheel itself. This makes it more effective in preventing material wear and at the same time in guiding the diamond wire, as the coating is not deflected during movement.

For the purposes of a better understanding, the outer part of the coating (1) is defined as the one which is in contact with the air and with the diamond wire, and the inner part is that which is in contact with the guide wheel (2). It is also understood that the upper and lower portions of the coating (1) are indicated with reference to the coating (1) placed on the guide wheel (2) and the lower portion being that which is closest to the centre of the guide wheel (2). A chamfer (4) is also understood as a cut in an edge of a solid body, in this case the solid body is the coating (1).

The coating (1) for application on a guide wheel (2) object of the present disclosure coats the entire surface where a diamond wire of any guide wheel (2) is positioned, and obviously the coating (1) when lining the guide wheel (2) presents a groove for positioning the diamond wire.

On the upper inner part, the coating (1) presents a groove (3) for fixing it to the guide wheel (2), on each of its sides, impeding its expulsion from the guide wheel (2), and thus allowing the guide wheel (2) itself to retain the profile in place and preventing it from moving out of position.

It also has a chamfer (4) on each edge of the lower outer part, which increases the contact area of the coating (1) on the wheel (2), ensuring greater effectiveness in the assembly adjustment and during the cutting operation.

In a preferred embodiment, the coating (1) is in a soft flexible material, such as rubber, or polyurethane, or elastomer, or a combination thereof.

In a preferred embodiment, the coating (1) has a parallelepiped geometry, even more preferably having width from 20mm to 50mm and height from 10mm to 40mm.

In a preferred embodiment, the coating (1) has a triangular geometry, even more preferably with an upper width between 25mm and 50mm, a lower width between 10 and 20mm, an overall height from 10mm to 40mm and a base height from 3 to 10mm.

The notches (3) preferably have a minimum height of 1mm and a maximum of 8mm, even more preferably between 3mm and 6mm, and a minimum width of 1mm and a maximum of 6mm, preferably between 2mm and 5mm. These measures promote the retention of the coating (1) in the recommended position so that it is not ejected during the cutting process.

The chamfers (4) preferably have a depth of from 1 to 20mm, preferably 2mm, or from 8.5mm to 15.5mm.

The notches (3) and/or chamfers (4) in a preferred embodiment are adjustable, which allows the coating to be adapted to solid guide wheels. This configuration is especially suitable for one-piece wheels where two-piece wheels are not possible. It has the advantage of better adapting to thermal and mechanical (wear) variations of the wheel by allowing small variations in the adjustment between wheel and coating.

In a preferred embodiment, the coating (1) is either moulded in a single round piece with the required diameter or, alternatively, is continuous for cutting to the required size.

As will be evident to a person skilled in the art, the present invention should not be limited to the embodiments described herein, with a number of changes being possible, which remain within the scope of this invention. Of course, the preferred embodiments above described are combinable in the different possible forms, the repetition of all such combinations being herein avoided.

## Claims

1. Coating (1) for application to diamond wire guide wheels (2) comprising a groove for positioning a diamond wire **characterized in that** it comprises:
a. two notches (3) on the upper inner part located on each of the sides, configured for fixing the coating (1) to a guide wheel (2); and
b. two notches (4) located on each edge of the lower outer part of the coating (1).

2. Coating according to the preceding claim wherein it comprises, optionally consists of, a flexible material, such as rubber, or polyurethane, or elastomer, or a combination thereof.

3. Coating according to the preceding claims, wherein the coating (1) has a parallelepiped geometry.

4. Coating according to the preceding claim, wherein it has a width between 20mm and 50mm, and height between 10mm and 40mm.

5. Coating according to any of claims 1-2, wherein it has a triangular geometry.

6. Coating according to the preceding claim, wherein it has upper width between 25mm and 50mm, lower width between 10 and 20mm, overall height from 10mm to 40mm, and base height from 3 to 10mm.

7. Coating according to any one of the preceding claims, wherein the notch (3) has a minimum height of 1mm and a maximum height of 8mm.

8. Coating according to any one of the preceding claims, wherein the notch (3) presents a height from 3 to 6mm.

9. Coating according to any one of the preceding claims, wherein the notch (3) presents a minimum width of 1mm and a maximum width of 6mm.

10. Coating according to any one of the preceding claims, wherein the notch (3) presents a width of 2mm.

11. Coating according to claim 9, wherein the notch (3) presents a width of 5mm.

12. Coating according to any of the preceding claims, wherein the chamfer (4) presents a depth between 1 and 20mm.

13. Coating according to any one of the preceding claims, wherein the chamfer (4) has a depth of between 2 and 20 mm, optionally 2 mm.

14. Coating according to claim 12, **characterised in that** the chamfer (4) presents a depth of between 8.5mm and 15.5mm.

15. Coating according to any one of claims 11 and 14, wherein the notches (3) and/or the chamfers (4) are adjustable.

16. Coating according to any one of the preceding claims, wherein the coating (1) is moulded in a single round piece to the desired diameter, or is continuous for cutting to the required size.

17. Diamond wire guide wheel (2) **characterized in that** it presents a coating (1) consisting of a groove for positioning a diamond wire and comprising:
a. two notches (3) on the upper inner portion located on each side, securing the coating (1) to a guide wheel (2); and
b. two chamfers (4) located on each edge of the lower outer portion of the coating (1).

18. Guide wheel (2) according to the preceding claim, wherein the coating (1) is according to any one of claims 1-16.
